# FASCICULE DE BREVET EUROPEEN

(11) **EP 1 134 112 B1**
(45) Date de publication et mention de la délivrance du brevet: **22.09.2004**
(21) Numéro de dépôt: 01400697.7
(22) Date de dépôt: 16.03.2001
(51) Int. Cl.: B60K 41/22, F16H 61/28

(54) **Transmission automatisée comprenant un embrayage d'entrée et un mécanisme de changement de vitesses à arbres parallèles**
Automatisiertes Getriebe mit einer Eingangskupplung und einer Schaltvorrichtung mit parallelen Wellen
Automated transmission with an input clutch and gear change device with parallel shafts

(30) Priorité: 17.03.2000 FR 0003429
(43) Date de publication de la demande: 19.09.2001
(73) Titulaire: Renault s.a.s., 92100 Boulogne Billancourt (FR)
(72) Inventeur: Pouyau, Laurent, 92290 Chatenay Malabry (FR); Rivoiron, Sylvain, 95320 Saint Leu la Forêt (FR)

(56) Documents cités:
- EP-A- 0 758 726
- WO-A-97/20155
- DE-A- 19 630 155
- DE-A- 19 815 666

## Description

La présente intention se rapporte à la commande des transmissions automatisées ou robotisées. Elle concerne l'adaptation de moyens de commande automatisés ou robotisés sur une transmission comprenant un embrayage d'entrée et un mécanisme de changement de vitesses à arbres parallèles.

Plus précisément, l'invention a pour objet une transmission automatisée comprenant un embrayage d'entrée, un mécanisme de changement de vitesses à arbres parallèles et à engrenages, et des moyens de commande automatisée placés sous le contrôle d'un calculateur électronique qui regroupent notamment un actionneur de l'embrayage d'entrée , des actionneurs d'engagement et de sélection de vitesses, des moyens de production de puissance hydraulique, et des moyens de distribution de puissance hydraulique vers les actionneurs. Une telle transmission générique est connue, par exemple, du document DE 198 15 666.

Les transmissions automatisées ou « robotisées » sont le plus souvent constituées d'une boîte de vitesses mécanique de base, analogue à celles qui sont commandées manuellement, sur laquelle est adapté un système ou « robot » de pilotage prenant en charge la commande de l'ouverture et de la fermeture de l'embrayage d'entrée, et celle des moyens de commande internes de sélection et de passage de vitesses.

Les «robots de pilotage » de boîte de vitesses mécanique comprennent des composants mécaniques, hydrauliques et électriques. Selon une disposition courante, la partie mécanique de la commande et les actionneurs hydrauliques sont montés directement sur la boîte, tandis que les autres composants hydrauliques, à savoir la pompe et le réservoir, de même que la partie électrique du système, principalement le moteur électrique de la pompe, et le calculateur électronique, sont généralement implantés à l'écart de la boîte, notamment dans le compartiment moteur.

Cette disposition présente l'inconvénient de fractionner le montage de la commande entre plusieurs opérations réalisées respectivement en usine de montage de boîte de vitesses ou de groupe moto-propulseur, et en usine d'assemblage véhicule, et de repousser l'ensemble des procédures d'apprentissage nécessaires à la mise en service de la commande robotisée, jusqu'à la fin de l'assemblage du véhicule.

La présente invention vise à simplifier le montage d'une transmission automatisée, et à simplifier les opérations de contrôle et d'apprentissage nécessaires à sa mise en service.

Dans ce but, elle propose que l'ensemble des actionneurs mécaniques, des moyens de production et de distribution de puissance, et la réserve d'huile nécessaire à leur fonctionnement soient regroupés dans un même module de robotisation.

Selon un premier mode de réalisation de l'invention, le module de robotisation est rapporté sur le mécanisme de changement de vitesses.

Selon un second mode de réalisation de l'invention, le module de robotisation est intégré à l'intérieur du mécanisme de changement de vitesses.

D'autres caractéristiques et avantages de l'invention apparaîtront clairement à la lecture de la description suivante d'un mode de réalisation non limitatif de celle-ci, en se reportant à la figure unique illustrant le premier mode de réalisation.

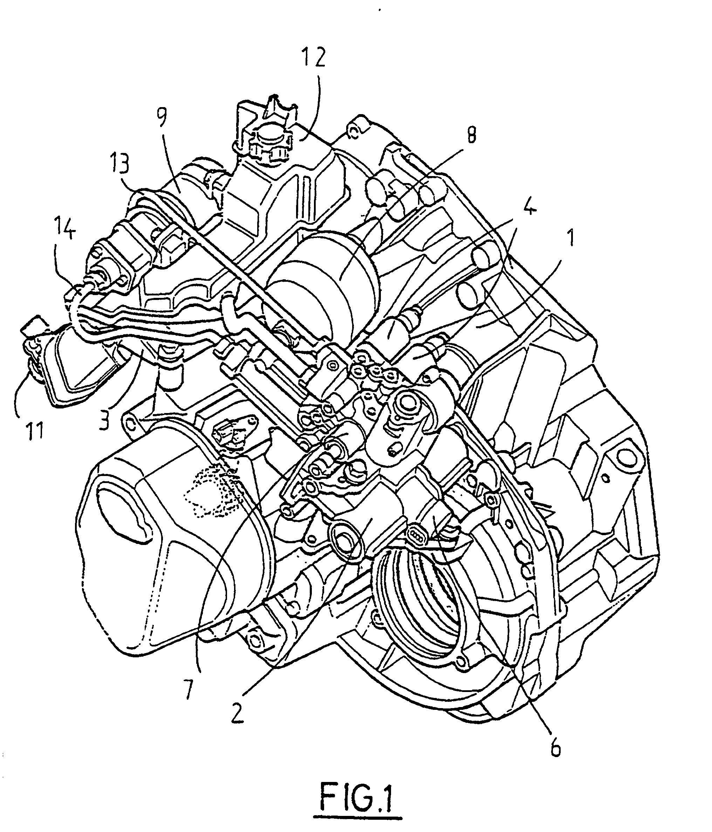

Sur la figure 1 on reconnaît, à l'extérieur du carter 1 de la transmission représentée en perpective, les différents éléments constitutifs du module de robotisation, monté sur celui-ci.

Ce module inclut un bloc hydraulique 2 qui regroupe les actionneurs d'engagement et de sélection des vitesses (non représentés), leurs électrovannes de pilotage 4, leurs capteurs de position 6 et de pression 7, ainsi qu'un accumulateur hydropneumatique 8.

Il comporte également un groupe électro-pompe 9 (qui se met en route pour remplir l'accumulateur 8 en réponse à une information du capteur de pression 7, un vérin d'embrayage 3 avec son propre capteur de position 11, un réservoir de liquide hydraulique 12, deux tuyaux d'alimentation haute pression 13, 14, reliant respectivement le bloc hydraulique 2 au vérin d'embrayage 3, et le groupe électro-pompe 9 à l'accumulateur, et un tuyau de retour au réservoir.

Le module inclut en outre d'autres éléments de circuit, tels que différents filtres, et au moins un clapet anti-retour, nécessaires à son bon fonctionnement.

Enfin, le calculateur électronique de commande du module de robotisation, qui n'apparaît pas sur le schéma, peut également être intégré à celui-ci, ou bien être déporté de façon classique en autre emplacement du véhicule, par exemple sur le moteur, sur le support du bac à batterie, ou encore être fixé sur la carrosserie.

Les avantages de la disposition proposée par l'invention sont nombreux. On peut noter en particulier que, grâce à son application,
- le module de robotisation peut être testé indépendamment de la transmission, de façon à garantir son propre niveau de qualité vis-à-vis de tous ses utilisateurs ultérieurs,
- on peut ensuite tester le bon fonctionnement de la transmission automatisée sur son propre site d'assemblage, et en garantir ainsi la sûreté de fonctionnement dès ce stade, et
- les procédures d'apprentissage des positions de vitesse engagée peuvent également être conduites sur le site d'assemblage de la transmission, sans attendre la fin de l'assemblage du véhicule.

## Revendications

1. Transmission automatisée comprenant un embrayage d'entrée, un mécanisme de changement de vitesses à arbres parallèles et à engrenages, et des moyens de commande automatisée placés sous le contrôle d'un calculateur électronique qui regroupent notamment un actionneur de l'embrayage d'entrée, des actionneurs d'engagement et de sélection de vitesses, des moyens de production de puissance hydraulique, et des moyens de distribution de puissance hydraulique vers les actionneurs, **caractérisée en ce que** l'ensemble des actionneurs mécaniques, des moyens de production et de distribution de puissance (8, 9), et la réserve d'huile (12) nécessaire à leur fonctionnement sont regroupés dans un même module de robotisation.

2. Transmission automatisée selon la revendication 1, **caractérisée en ce que** le module de robotisation, **caractérisé en ce que** le module de robotisation est rapporté sur carter (1) du mécanisme de changement de vitesses.

3. Transmission automatisée selon la revendication 1, **caractérisée en ce que** le module de robotisation est intégré à l'intérieur du mécanisme de changement de vitesses.

4. Transmission automatisée selon la revendication 1, 2 ou 3, **caractérisée en ce que** le module de robotisation inclut un bloc hydraulique (2) regroupant les actionneurs de sélection et d'engagement des vitesses, un accumulateur oléo-pneumatique (8) alimentant ces derniers par des conduites internes au module, et des moyens de pilotage (4, 7, 11,13,14) des actionneurs.

5. Transmission automatisée selon l'une des revendications précédentes, **caractérisé en ce que** le module de robotisation inclut un groupe électro-pompe (9) et un vérin d'actionnement (3) de l'embrayage d'entrée.

6. Transmission automatisée selon l'une des revendications 4 ou 5, **caractérisée en ce que** le bloc hydraulique (2) est raccordé au vérin d'actionnement (3) de l'embrayage par une conduite d'alimentation haute pression (13).

## Patentansprüche

1. Automatisiertes Getriebe, welches eine Eingangskupplung aufweist, einen Gangwechsel-Mechanismus mit parallelen und übersetzten Wellen und automatisierte Steuermittel, welche unter Steuerung eines elektronischen Rechners gesetzt sind, welche insbesondere einen Betätiger der Eingangskupplung umfassen, Betätiger eines in Eingriffbringens und einer Auswahl von Gängen, Mittel zur Erzeugung einer hydraulischen Kraft und Mittel zur Verteilung der hydraulischen Kraft in Richtung zu den Betätigem, **dadurch gekennzeichnet, dass** die Gesamtheit der mechanischen Betätiger, der Mittel zur Erzeugung und Verteilung der Kraft (8, 9) und die Ölreserve (12), welche für ihren Betrieb notwendig ist, in einem gleichen Automatisierungsmodul umfasst sind.

2. Automatisiertes Getriebe nach Anspruch 1, **dadurch gekennzeichnet, dass** das Automatisierungsmodul an einem Gehäuse (1) des Gangwechsel-Mechanismus angefügt ist.

3. Automatisiertes Getriebe gemäß Anspruch 1, **dadurch gekennzeichnet, dass** das Automatisierungsmodul im Inneren des Gangwechsel-Mechanismus integriert ist.

4. Automatisiertes Getriebe gemäß Anspruch 1, 2 oder 3, **dadurch gekennzeichnet, dass** das Automatisierungsmodul einen hydraulischen Block (2) einschließt, welcher die Betätiger einer Auswahl und eines in Eingriffbringens der Gänge umfasst, einen ölhydraulischen Speicher (8), welcher diese letzteren durch innere Leitungen des Moduls versorgt, und Steuermittel (4, 7, 11, 13, 14) der Betätiger.

5. Automatisiertes Getriebe gemäß einem der vorhergehenden Ansprüche, **dadurch gekennzeichnet, dass** das Automatisierungsmodul eine Elektro-Pumpen-Gruppe (9) und einen Betätigungs-Stellantrieb (3) der Eingangskupplung umfasst.

6. Automatisiertes Getriebe gemäß einem der Ansprüche 4 oder 5, **dadurch gekennzeichnet, dass** der hydraulische Block (2) an dem Betätigungs-Stellantrieb (3) der Kupplung durch eine Hochdruck-Versorgungsleitung (13) angeschlossen ist.

## Claims

1. An automatic transmission comprising an input clutch, a gear shift mechanism with parallel shafts and gears, and automatic control means placed under the control of an electronic computer which in particular comprise an actuator of the input clutch, gear engagement and selection actuators, hydraulic power production means and means for the distribution of hydraulic power to the actuators, **characterised in that** the assembly of the mechanical actuators, the power production and distribution means (8, 9), and the oil supply (12) needed for their operation is located in the same robotic module.

2. An automatic transmission as claimed in claim 1, **characterised in that** the robotic module is fitted on the housing (1) of the gear shift mechanism.

3. An automatic transmission as claimed in claim 1, **characterised in that** the robotic module is integrated within the gear change mechanism.

4. An automatic transmission as claimed in claim 1, 2 or 3, **characterised in that** the robotic module comprises a hydraulic unit (2) comprising the gear engagement and selection actuators, an oleo-pneumatic accumulator (8) supplying the latter via ducts within the module, and drive means (4, 7, 11, 13, 14) of the actuators.

5. An automatic transmission as claimed in one of the preceding claims, **characterised in that** the robotic module comprises an electric pump unit (9) and an actuator (3) of the input clutch.

6. An automatic transmission as claimed in one of claims 4 or 5, **characterised in that** the hydraulic unit (2) is connected to the actuator (3) of the clutch by means of a high pressure supply duct (13).
